# EUROPEAN PATENT APPLICATION

(11) **EP 4 610 748 A1**
(43) Date of publication of application: **03.09.2025**
(21) Application number: 24160050.1
(22) Date of filing: 27.02.2024
(51) Int. Cl.: G05B 15/02, H04W 8/00, H04L 67/01, G05B 21/00

(54) **APPARATUS, METHODS AND SYSTEMS FOR LOW-LATENCY, AND COORDINATOR OF SENSORS**

(71) Applicant: Helsing GmbH, 81671 Munich (DE)
(72) Inventor: SCHMAUSER, Dominik, 81671 Munich (DE); BAKER, James, 81671 Munich (DE); GULA, Szymon, 81671 Munich (DE)
(74) Representative: Rummler, Felix

(57) **Abstract**

A management component for a sensor system including a plurality of sensors, wherein the management component is configured to: receive data from a first sensor of the sensor system, wherein the data relates to at least one of a plurality of predetermined observations performed by the first sensor; based on the received data, select at least one second sensor of the sensor system; transmit at least one instruction based on the received data to the selected at least one second sensor.

## Description

### Field

The present disclosure generally relates to a sensor system. In particular, the present disclosure relates to methods, systems, and devices for managing a sensor system including a plurality of heterogeneous sensors.

### Background

Sensors based systems are generally known and they are in deployed in many different domains. They usually comprise a set of sensors that monitor a predefined environment, where the environment may comprise an area, or a process, or other entities. Furthermore, sensor-based systems may comprise a set of management components that receive data from the sensors and coordinate sensors to produce data about the monitored environment.

However, sensors systems also require a large amount of messaging for both data transmission and coordination between sensors and management components. These communications are often redundant, for example when the management components receive redundant information they may provide redundant instructions to different sensors . Another source of redundancy is in the data communication from sensors because sensors may communicate data that they observed without any abstraction, or with minimal abstraction if at all, to the management components. These communications result in many messages that require a large communication bandwidth, long processing time, and consequently energy.

The present invention relates to methods, systems, and devices for enabling sensors to reduce the computational effort and consequently energy requirements of sensor-based systems.

### Summary of the Invention

The present invention is defined in the independent claims. The dependent claims recite selected optional features. In the following, each of the described methods, systems, apparatuses, examples, and aspects, which do not fully correspond to the invention as defined in the claims is thus not according to the invention and is, as well as the whole following description, present for illustration purposes only or to highlight specific aspects or features of the claims.

According to a first aspect of the present disclosure, there is provided a management component for a sensor system comprising a plurality of sensors, wherein the management component is configured to: receive data from a first sensor of the sensor system, wherein the data relates to at least one of a plurality of predetermined observations performed by the first sensor; based on the received data, select at least one second sensor of the sensor system; and transmit at least one instruction based on the received data to the selected at least one second sensor.

The management component of a sensors system comprising a plurality of sensors may be communicatively coupled with each sensor of the plurality of sensors. The management component may also be configured to receive data from the sensors. The management component may also transmit instructions to the sensors, wherein the instruction may configure the sensors to perform the operation indicated by the instruction.

In some examples, the management component may be further configured to receive from the each of the plurality of sensors of the sensor system at least one sensor capability, store the at least one sensor capability of each of the plurality of sensors of the sensor system, and select the at least one second sensor based on the stored capabilities of the first and/or at least one second sensor.

The management component may be a central "sensor managing component" that keeps track of all sensors of the sensor system. The management component is further aware of the capabilities of the managed sensors. The capabilities of any sensor may include one or more of the field of view, available computing resources, type of output data, communication bandwidth, power supply, etc. Based on this awareness, the management component can instruct sensors to perform a task to detect and track objects based on sensors capabilities and suitability, in particular without the first sensor being aware of the second sensor and/or the second sensor's capabilities.

In some examples, the at least one capability of each of the plurality of sensors of the sensor system received by the management component indicates one or more of the type of sensor, type of output data, computing resources, power supply, location, resolution, data accuracy, data reliability, field of view, types of detectable events, types of detectable objects, and detectable locations.

Sensor capabilities should describe what the functionalities of the sensor, and how to configure the sensor to perform the sensing operation required by the management component.

In some examples, the at least one capability received by management component from each of the plurality of sensors of the sensor system may comprise an accuracy level of the sensor; and the management component may be further configured to select the at least one second sensor based on the stored accuracy level.

The management component may select the sensor to which sensor to send instructions based on the sensor capabilities and/or accuracy. For example, an object detected by the first sensor may be further inspected by a second (potentially more accurate) sensor, or an object detected by a first sensor may be targeted by a second sensor for reasons of efficiency or optimization such as load balancing, or the detected object may leave the field of view of the first sensor and is then searched for by a second sensor with an appropriate field of view.

In some examples, the management component may be configured to instruct the at least one second sensor to detect and/or track the detected object if the determined accuracy level of the data of the first sensor is above a threshold.

In some examples, the management component is further configured to determine an accuracy level data received from the first sensor based on a reliability specified in the data, and/or a stored accuracy level of the first sensor.

Some sensors may be more accurate than others, for example radars may be more reliable, e.g. provide higher confidence data, than electrooptical sensors, such as cameras. Also, some sensors may be more accurate when the readings are in the centre of the field of view of the sensor, and less so when the readings are performed at the limits of the field of view of the sensor.

In some examples, the management component may be further configured to: determine that the received data indicates that a detected object is entering or predicted to enter the field of view of the at least one second sensor; and to instruct the at least one second sensor to provide data about the detected object.

In some examples, the management component may select one or more sensors from the plurality of sensors to detect and track an object. The exemplary management component may determine that an object is exiting the field of view of the first sensor and entering the field of view of the second sensor. Consequently, the management component may transfer a tracking task from the first sensor to the second sensor. To this end, the management component may send instructions to the second sensor to identify and start tracking the detected object. The instructions may include a unique object identifier to enable the second sensor to identify the object. Also, the management component may send instructions to the first sensor to cease tracking the object. The first and second sensors do not need to be aware of each other or communicate with one another. Accordingly, the management component can manage the transfer between different sensors at relatively low cost in terms of processing and communication bandwidth.

In some examples, the management component may be further configured to receive data from the first sensor continuously or in response to a detection of one of the plurality of predetermined observations.

The management component may receive data updates sent from the individual sensors either continuously or in response to the detection of one of a plurality of predetermined observations.

In some examples the plurality of predetermined observations may include a detection of an object or a change of state of a detected object.

Status changes may indicate that some relevant event related to the object occurred.

In some examples, the plurality of predetermined observations may include the detection of a new object and/or the detection of a previously detected object by a new sensor and/or by a sensor that has not previously detected the object.

In some examples, the management component may be further configured to receive data from at least two sensors of the system sensors relating to an event or interrelated events; and transmit at least one instruction corresponding to a single update representative of the same event or interrelated events to the selected at least one second sensor.

The management component may be configured to detect "duplicate updates" from different sensors observing the same or interrelated events, for example the detection of a new object or the detection of a status change in respect of a previously detected object by different sensors. In such case, the management component transmits to the selected second sensors only one set of instructions based on the duplicate or interrelated events. Thus, multiple updates in respect of the same or interrelated events are avoided, thereby reducing bandwidth.

In some examples, the management component may be further configured to select more than one of said second sensors, and/or to broadcast the instructions to said more than one of said second sensors.

The management component may also broadcast instructions to multiple or all the sensors of the system.

In some examples, the management component may be further configured to receive a response from the at least one second sensor indicating that the at least one second sensor rejects the instructions.

Sensors may be busy with various tasks, some of which may be considered high importance tasks, because of these tasks or for other reasons sensors may reject the instructions of the management component.

In some examples, the management component wherein the response from the at least one second sensor may indicate a current status of the at least one second sensor.

Sensors may optionally indicate their current status in a response to the management component. The current status may indicate a cause for not preforming the instructions completing a requested task.

In some examples, the current status indicated in the response may indicate that the at least one second sensor is performing operations of higher priority.

One possible cause for not performing the task may be that the at least one second sensor may be working on more important tasks.

In some examples, the at least one second sensor includes or is associated with at least one effector, wherein said at least one instruction causes the at least one effector to perform an operation in relation to a device controlled by the at least one effector, and/or wherein the received data includes data from at least one effector, and in particular wherein the received data relates to the device controlled by the at least one effector.

The management component may further be capable of controlling at least one effector. Effectors may perform actions in the environment that may lead to changes in the environment. For example, an effector may be able to control the brakes of a vehicle and stop the vehicle.

A computer program product comprising a computer-readable storage medium including instructions that, when executed by a processor, cause the processor to implement a management component of any preceding examples.

According to a second aspect of the present disclosure, there is provided a method for management of a sensor system comprising a plurality of sensors, the method comprising receiving data from a first sensor of the sensor system, wherein the data relates to at least one of a plurality of predetermined observations performed by the first sensor; selecting at least one second sensor of the sensor system, wherein the selection is based on the received data; transmitting at least one instruction based on the received data to the selected at least one second sensor.

According to a third aspect of the present disclosure, there is provided a sensor system comprising a management component according to any preceding example; and a plurality of sensors, wherein the management component is implemented in a central processing platform communicatively coupled to the sensors, or wherein the management component is implemented by at least one of the plurality of sensors communicatively coupled to the others of the plurality of sensors.

### Brief Description of the Drawings

Figure 1 illustrates an example of sensors system.
Figure 2 illustrates an exemplary protocol of communication between the management component and a prototypical sensor.
Figure 3 illustrates three examples of interactions between sensors and the management component that may be produced by the protocol.
Figure 4 illustrates an example of interaction between sensors and the management component.
Figure 5 illustrates a flow chart of a method performed by a managing component.

### Detailed Description of Exemplary Embodiments

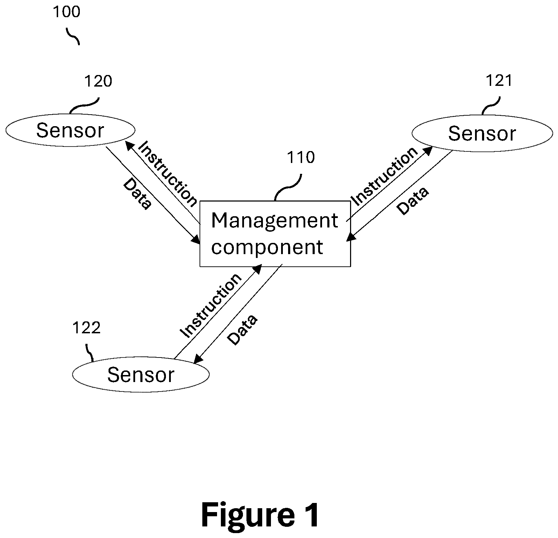

Figure 1 is a schematic illustration of the architecture of a sensors system 100, where the sensor system includes a management component 110 and one or more sensors 120, 121, 122. The sensors 120, 121, 122 are configured to observe aspects of their environment, and to transmit to the management component data based on the gathered observations. In turn, the management system 110 may coordinate the sensors 120, 121 and 122 to improve the data collection process by sending instructions to the sensors 120, 121, 122.

An example of sensor system may be an autonomous vehicle, such as an autonomous truck. From the point of view of the autonomous truck, the environment may include the road on which it travels including aspects such as unexpected obstacles, but the environment may also include the internal mechanic of the autonomous truck, and the radio communication to receive relevant information.

Consequently, the autonomous truck may include multiple sensors, such as the exemplary sensors 120, 121, 122. Exemplary sensors may include radar/lidar sensors and infrared cameras to monitor the road in front and detect obstacles in the way of travel. Additionally, the autonomous truck may include position sensors such a GPS to be aware of its location, visual sensors, such as an electrooptic cameras, to recognize landmarks that may be relevant during travel and delivery. Other sensors may be related to the engine and the internal mechanics and electronic of the truck such as sensors monitoring aspects of the engine or of the brake system. Yet other sensors may relate to radio communications to be aware of incoming traffic jams as well as receiving instructions from a home base system that may inform the truck of the stops to be made to load or unload goods. The radio sensors may also passively monitor the amount of radio communications to and from nearby vehicles thus gathering indirect information about the density of traffic nearby.

The sensors may transmit data to a management system 110 that may detect information patterns in the data and derive conclusions about aspects of the environment in which the autonomous truck is travelling. Furthermore, the management system 110 may coordinate the sensors 120, 121 and 122 to improve the data collection process. For example, the management component may instruct some sensors to monitor/observe the environment, such as the road on which the truck travels; and instruct other sensors that may provide data with higher accuracy may to analyse specific features of the objects detected in the environment. with the purpose of transmitting to the management component data of highest quality possible related to the nearby environment given the available sensing capabilities.

Sensors may observe the environment and from these observations detect objects and events. As an example, the observations of an image sensor, such as an electrooptical sensor or a camera, may be images. In other words, the raw sensor data for the image sensor may be images. From these images the sensor may identify data that may be relevant for the management system. For example, the abstraction performed by an image sensor may include the analysis of images and the derivation of data indicating the presence of an object at a location. The image sensor may then communicate to the management component only the data, i.e. the information, that "an object has been detected at a location".

Generally, sensors may transmit to the management component data derived from observations. However, sensors may not transmit observations. In the example of the image sensor, images, in other words the observations, that have been used to detect the event are not transmitted thus reducing the bandwidth requirements of the sensor system. Furthermore, some data, such as data about movement, may require multiple observations. In these cases, just data about the movement of an object is transmitted, while the multiple observations, or images, are not transmitted.

In some embodiments, the data transmitted by the sensor to the management component may include metadata indicting properties of the transmitted data. The metadata may include information such as time and date of the data detection or information about the reliability of the data transmitted.

Additionally, the communication between the sensor and the management component may be based on a "need to know" policy, where information may be deemed relevant if the management component may need to take a decision on the information. In the example of the truck a relevant event may be the appearance of an obstacle on the road, or the detection of a new radio station providing road information. In other examples, relevant events may relate to a specific object such as a traffic light changing from red to green. Other observations may relate to a change of state in the environment, for example a sudden increase of traffic.

Sensors may update the management component either continuously or on regular prescheduled sequences of updates or, more preferably, in response to the detection of one of a plurality of predetermined events. Examples of events may include the detection of a new object, or a change of a status of a detected object. Changes of state may relate to changes in one or more parameters related to a monitored object such as a change of location and/or speed changes or changes of other parameters. Status changes are particularly relevant in relation to violations predictions or expectations of the behaviour of a detected object.

Updates may also relate to the ability of a sensor to detect objects in the environment. A sensor may update the management component that an object is leaving the sensor field of view, and thus the sensor may not be able to view and monitor or tack the object any further. Thus, the management component may instruct a different sensor with a more appropriate field of view to search and monitor or track the object.

The management component may transmit instructions to the sensors upon receiving data about relevant events such as the appearance of an object in the environment, or a change of state of an already detected object. The instruction may indicate to the sensors what data that is relevant for the management component. The instruction may also indicate an update schedule, whether the management requires constant updates or updates on an event base, and when updates are event based, the instruction may also specify the list of predefined events that may trigger an update. Instructions may be associated with configurations of operations to be performed by the sensors. For example, an optical sensor may provide multiple zoom levels, thus an instruction may configure the optical sensor to use a specific zoom level. Alternatively, instructions may be associated to a task to be performed by the sensor, for example a task may be to detect the type of an object at a given location. Thus, the sensor plans its way to address the requested task and report information derived.

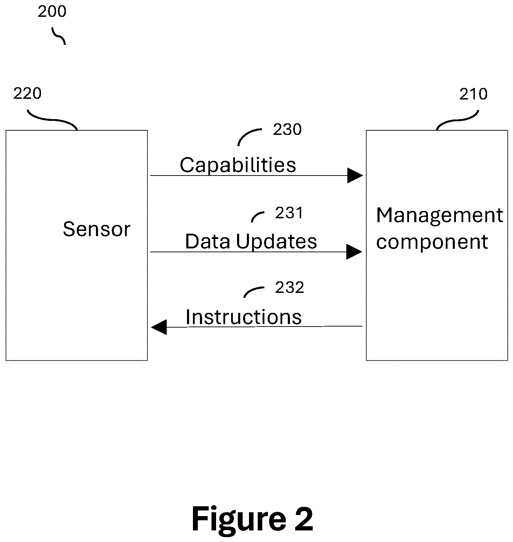

Figure 2 illustrates an exemplary protocol of communication 200 between the management component 210, which could be management component 110. and a prototypical sensor 220, which could be any one of the sensors 120, 121, or 122. More generally, the prototypical sensor may represent any sensor in a sensor system.

According to protocol 200, the management component 210 may receive from sensor 220 data updates 231 that may relate to one or more observations performed by the sensor. Based on the received data, the management component 210 may transmit to the exemplary sensor 220 instructions 232 that may indicate to the sensor 220 how to proceed in the sensing task.

Since the prototypical sensor may be any of sensors 120, 121, or 122, and more generally, the prototypical sensor may represent any sensor in a sensor system, the sensor that transmit the data may not be the same sensor that receive the instructions. Generally, upon receiving the data from a first sensor, the management component 210 may select one or more sensors to which to send the instructions.

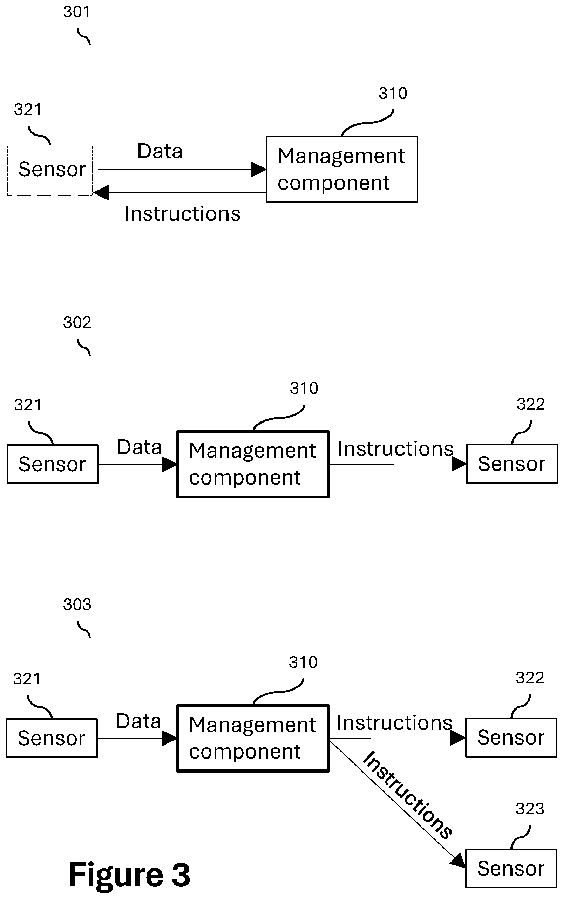

Figure 3 illustrates three examples of interactions 301, 302 and 303 between sensors and the management component according to protocol 200.

In interaction 301 the management component 310, which could be management component 110 and/or 210, may receive the data from a first sensor 321. Based on the received data, the management component 310 may select the first sensor 321 as the recipient of further instructions and finally send the further instructions to the first sensor 321. In other words, in interaction 301, the first and the second sensor are the same sensor. In an example, sensor 321 may have observed a new object, consequently sensor 321 may transmit data about the detected to the management component 310. The management component 310 may then select sensor 321 to track the detected object, thus the management component 310 may transmit to sensor 321 instructions to tack the object.

In interaction 302, upon receiving data from sensor 321, the management component 310 based on the received data may select a second sensor, sensor 322, and send the instructions to sensor 322. In an example, sensor 321 may have observed a new object and transmitted data about the detected to the management component. The management component, upon receiving the data, may then select sensor 322, that may be more accurate than sensor 321 to verify the discovery of the new object. The management component may then transmit to sensor 321 instructions to verify the existence of the object.

In interaction 303, the management component based on the data received from sensor 321 may select a second sensor 322 and a third sensor 323, thus the management component may send instructions to both sensor 322 and 323. In an example, sensor 321 may have observed a new object and transmitted data about the detected to the management component. The management component may then select sensor 322, that may be more accurate than sensor 321 to verify the discovery of the new object and select sensor 323 to track the object because the object appears to be leaving the field of view of sensor 321. Finally, the management component may transmit instructions to sensor 322 verify the existence of the object and to 323 to track the detected object.

In view of the exemplary interactions 301, 302 and 303, it should be appreciated that upon receiving data from a sensor, like exemplary sensor 321, the management component 310 may send instructions to one or more sensors. Each receiving sensor may receive a different set of instructions, and the sensor that produced the data, in the example sensor 321, may be included in the one or more sensors that receive a set of instructions. It should also be appreciated that the management component upon receiving data from a sensor may also opt not to send any instructions thus maintaining unchanged the configuration of the senor system.

In some embodiments the management component 310 may broadcast or multicast an instruction to one or more sensors or to all sensors. Specifically, the management component may broadcast or multicast an instruction when one or more sensors should receive the same instruction.

The interactions above demonstrate that each sensor interacts exclusively with the management component. Protocol 200 does not enable any direct data exchange between sensors. Consequently, protocol 200 simplifies the structure of sensors since the only protocol requirements are to receive instructions and respond by sending the requested data. Furthermore, all interactions between the management component and the sensors are direct interactions that may be triggered by updates in the data and thus lead to reducing the communication overhead, thus increasing the operation speed and a reducing the required network bandwidth.

Protocol 200 and interactions 301, 302, and 303 demonstrate that the management component may be configured to transmit instructions only to selected sensors of the system. The selection of sensors may depend on the capabilities declared by each sensor including the level of reliability of the data gathered by the sensor. For example, a management component when dealing with the detection of a new object may seek detailed information about the newly detected object, thus, the management component may rather select an image sensor with zoom capabilities over an image sensor with a wide-angle. On the other hand, when the management component requires information about the direction of motion of the newly found object an overview of a given wide area, the image sensor may rather select the sensor with a wide-angle may more easily track the object than an image sensor with the zoom lens that may have a limited viewing area.

Consequently, the protocol 200 above by enabling point to point communication between sensors and the management component and enabling the management component to select the sensor that may be more relevant for the specific sensing task required, may reduce processing overhead and communication bandwidth.

Figure 2 further illustrates the transmission of capabilities 230 from the prototypical sensor 220 to the management component 210. The transmission of capabilities 230 may be performed by any sensor 220 upon connecting the management component 210. With the transmission of capabilities, the sensor informs the management component of the type of sensing that it can perform. Example of sensor's capabilities may include the type of sensor, such as radar vs electrooptical sensor, and at least, computing resources, type of output data, location associated with the sensor, resolution level, data accuracy level, and field of view; types of events sensed; types of objected sensed; locations detected by the sensor. The capabilities of the sensor may include configuration features of the sensor that may enable the management component to instruct the sensor by configuring the sensing task to be performed by the sensor.

Upon receiving the capabilities sent by the sensor, the management component stores the capabilities received. Since the management component receives the capabilities of each sensor in the system, the management component may be considered a registry of all sensors that are present in the sensor system.

The management component may consider the capabilities received from the sensors to select the sensors that may receive the instructions. In other words, when sensor 321 sends data to the management component, the management component performs a decision of whether additional information may be needed in relation to the data received, and upon a decision that more information is required, the management component may send instructions to at least one sensor, such as sensors 321, 322, 323, to provide the required information.

Thus, the management component may be considered a central "sensor managing component" that keeps track of all sensors of a sensor system. A sensor may be included in the platform to be part of the sensor system only when the management component is aware of the capabilities of the sensor. Further, by allowing sensors to become part of the system upon transmitting their capabilities, sensors may connect to the sensor system dynamically even during the ongoing operations of the sensor system.

The transmission 230 may also enable sensors to remove capabilities from the management component. This cancellation may happen when some functionalities of one of the sensors may degrade or malfunction. For example, an image sensor such as an electrooptical sensor may have a zooming capability for detailed analysis, and a wide-angle capability for large area detection. The image sensor may then transmit both capabilities with the management component. However, should one capability fail, for example should the zoom stop working, the image sensor may just remove the zooming capability from the managing component and continue its data collection with the wide-angle capability for large area detection. Consequently, the management component may not instruct the damaged electrooptical sensor to perform tasks that the sensor cannot accomplish. The ability to remove capabilities may also enable smooth degradation of the system in case of sensors failures thus preventing system failures.

In some embodiments, the capabilities transmitted by sensors may be associated to a degree of reliability indicating how reliable is the transmitted data. For example, an optical sensor with zooming capabilities may be very reliable to detect features of an identified object, but because of the limited field of view the sensor may be less reliable in identifying new objects in the environment.

Additionally, sensors may compute the reliability of the data that they transmit based on the way they observed the environment. For example, an electrooptical sensor may have a good reliability respect to objects that are near the centre of the lens, and a worse reliability for objects that are at the edge of the lens where more optical distortions may apply. Reliability of the data may be transmitted as metadata associated with the transmitted data. Thus, the management component may be further configured to determine the accuracy of the data received from a sensor either by relying on the reliability specified in the metadata, or by relying on the reliability declared by the sensor, or by combining the reliability of the sensor with the reliability of the data.

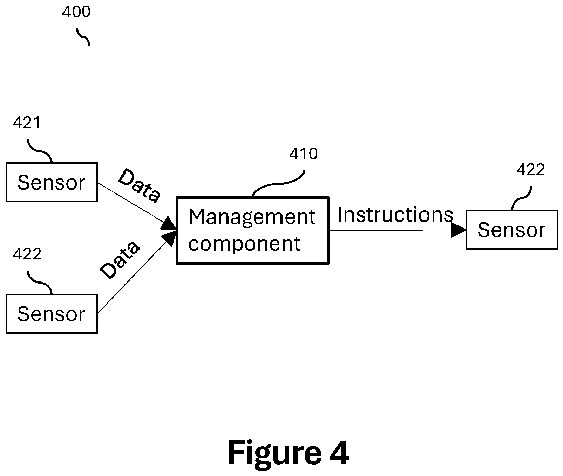

Figure 4 illustrates an example of interaction 400 between sensors and the management component according to protocol 200.

The management component 410 may receive duplicate updates from the different sensors 421 and 422, where duplicate updates may be defined as a plurality of updates from different sensors that refer to the same event and/or to the same object. An example of duplicate update may be the detection of an object by two or more different sensors.

The management component 410 may be configured to detect duplicate updates and consequently, the management update may consider the duplicate updates as a single update.

Thus, rather that selecting a second sensor in relation to the first update and another sensor in relation to the second update, the management component selects only one sensor 422 for both updates. Therefore, less communication and computational resources are required to deal with the

In some embodiments a sensor may respond to a transmission of instructions by the management component with a rejection. In other words, the sensor transmits to the management component that it rejects the instructions. These responses indicate to the management component that the sensor will not perform the sensing instructions that the sensor was asked to perform.

In some embodiments the transmitted rejection may include a cause indicating the reason for the rejection and other information such as whether the cause is temporary or persistent. An example of temporary cause may be that the sensor is performing tasks that prevent the sensing requested or that the sensor is overloaded thus unable to perform additional tasks. A persistent cause may for example indicate a failure of the sensing apparatus.

However, the sensors may be configured to apply a "need to know" policy to reporting information. Thus, a sensor upon rejecting instruction from the management component may autonomously decide whether to send a rejection and whether the rejection may include a cause of the rejection. The management component upon transmitting an instruction and not receiving a response may conclude that the request was rejected and act consequently.

In some embodiments the management component may react to a rejection response by issuing instructions to other sensors, so that the other sensors may provide the information required by the management component. In some embodiments, the management component may abandon the sensing task. In some embodiments, the management component may attempt to transmit the instructions to the sensor at a later time.

In some embodiments the sensor system may also include effectors that perform actions other than sensing the environment. These effectors may control devices or components of devices that may perform actions that may affect objects or devices in the environment that the sensors are monitoring. For example, the self-driving truck may include a breaking effector with the ability of affecting the braking system and thus slowing or stopping the truck. Thus, upon detecting an obstacle on the road the management component may request the breaking effector to stop the truck.

Effectors may transmit their capabilities to the management component, so that the management component may be able to take decisions on when and how to utilize the effector. Furthermore, the management component may require a set of instructions to indicate to the effector how to act on the breaking effector to stop the truck.

In embodiments in which effectors are included in the sensor system, effectors may be considered a type of sensors. Consequently, the prototypical sensor 220 in protocol 200 may be replaced by any effector. Furthermore, effectors may also replace any one of the sensors in interactions 301, 302 and 303 as well as in interaction 400.

The managing component may be able to distinguish sensors and effectors only by their capabilities: sensors providing data and information, effectors providing control on some devices and possibly information about the controlled devices.

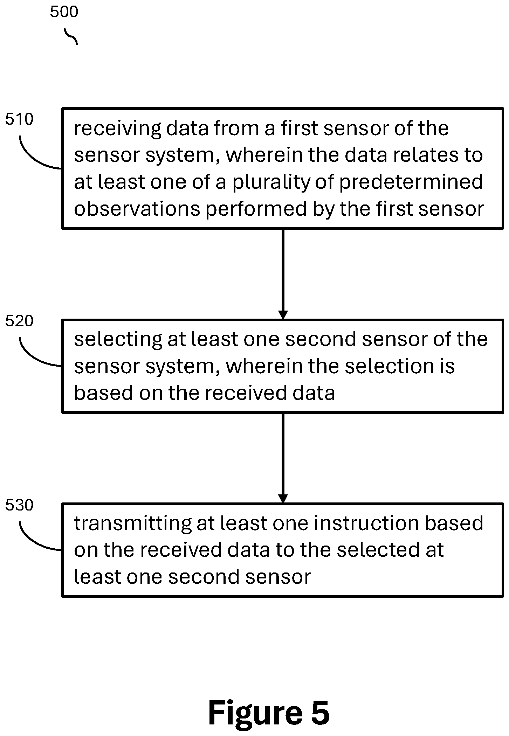

Figure 5 illustrates a flow chart of a method 500 performed by a managing component, which may be the managing component 110, for receiving data transmitted by a sensor, and reacting by sending instructions to other sensors.

In step 510 the managing component may receive data from a first sensor. The received data may relate to at least one of a plurality of predetermined observations performed by the first sensor.

In step 520 the managing component may select at least one second sensor of the sensor system, wherein the selection is based on the received data.

In step 530 the managing component may transmit at least one instruction based on the received data to the selected at least one second sensor.

## Claims

1. A management component for a sensor system comprising a plurality of sensors, wherein the management component is configured to:
receive data from a first sensor of the sensor system, wherein the data relates to at least one of a plurality of predetermined observations performed by the first sensor;
based on the received data, select at least one second sensor of the sensor system;
transmit at least one instruction based on the received data to the selected at least one second sensor.

2. The management component of claim 1, further configured to:
receive from each of the plurality of sensors of the sensor system at least one sensor capability;
store the at least one sensor capability of each of the plurality of sensors of the sensor system; and
select the at least one second sensor based on the stored capabilities of the first and/or at least one second sensor.

3. The management component of claim 2, wherein the at least one capability of each of the plurality of sensors of the sensor system indicates one or more of the type of sensor, type of output data, computing resources, power supply, location, resolution, data accuracy, data reliability, field of view, types of detectable events, types of detectable objects, and detectable locations.

4. The management component of any preceding claim, further configured to:
determine that the received data indicates that a detected object is entering or predicted to enter the field of view of the at least one second sensor; and
instruct the at least one second sensor to provide data about the detected object.

5. The management component of any preceding claim, further configured to receive data from the first sensor continuously or in response to a detection of one of said plurality of predetermined observations.

6. The management component of any preceding claim, wherein said plurality of predetermined observations includes a change of state of a detected object.

7. The management component of claim 6, wherein the change of state is associated with a parameter indicating a location and/or movement of the detected object, in particular a movement of the detected object away from or towards a predetermined location, a movement of the detected object out of or into a field of view of the first and/or the second sensor, a change of direction, and/or a change of speed.

8. The management component of any preceding claim wherein said plurality of predetermined observations include the detection of a new object and/or the detection of a previously detected object by a new sensor.

9. The management component of any preceding claim, further configured to
receive data from at least two sensors of the system sensors relating to an event or interrelated events; and
transmit at least one instruction corresponding to a single update representative of said event or said interrelated events to the selected at least one second sensor.

10. The management component of any preceding claim, further configured to select more than one of said second sensors, and to broadcast the instructions to said more than one of said second sensors.

11. The management component of any proceeding claim, wherein the at least one second sensor includes or is associated with at least one effector, wherein said at least one instruction causes the at least one effector to perform an operation in relation to a device controlled by the at least one effector, and/or wherein the received data includes data from at least one effector, and in particular wherein the received data relates to the device controlled by the at least one effector.

12. The management component of any preceding claim, further configured to:
receive a response from the at least one second sensor, wherein the response indicates that the at least one second sensor or the at least one effector cannot perform the at least one instruction, and/or
wherein the response indicates a current status of the at least one second sensor or the at least one effector, wherein, in particular,
the current status indicates that the at least one second sensor or the at least one effector is performing operations of higher priority.

13. The management component of claim 11 or 12, further configured to:
receive data from at least one effector, wherein the data relates to the device controlled by the at least one effector.

14. A computer program product comprising a computer-readable storage medium including instructions that, when executed by a processor, cause the processor to implement a management component of any preceding claim.

15. A sensor system comprising
a management component according to any of claims 1 to 14; and
a plurality of sensors,
wherein the management component is implemented in a central processing platform communicatively coupled to the sensors, or
wherein the management component is implemented by at least one of the plurality of sensors communicatively coupled to the others of the plurality of sensors.
